# EUROPEAN PATENT SPECIFICATION

(11) **EP 3 114 015 B1**
(45) Date of publication and mention of the grant of the patent: **11.12.2019**
(21) Application number: 15757701.6
(22) Date of filing: 03.03.2015
(51) Int. Cl.: B62D 35/00, B62D 37/02

(54) **METHOD AND SYSTEM TO ENSURE ACCEPTABLE FUNCTION OF AN AIR GUIDING DEVICE AT A VEHICLE.**
VERFAHREN UND SYSTEM ZUR SICHERSTELLUNG EINER AKZEPTABLEN FUNKTION EINER LUFTLEITENDEN VORRICHTUNG AN EINEM FAHRZEUG
PROCÉDÉ ET SYSTÈME POUR ASSURER UN FONCTIONNEMENT ACCEPTABLE D'UN DISPOSITIF DE GUIDAGE D'AIR SUR UN VÉHICULE

(30) Priority: 04.03.2014 SE 1450240
(43) Date of publication of application: 11.01.2017
(73) Proprietor: Scania CV AB, 151 87 Södertälje (SE)
(72) Inventor: JOHANSSON, Jonny, S-147 71 Grödinge (SE); ISRAELSSON, Peter, SE-125 51 Alvsjö (SE); LARSSON, David, S-125 60 Älvsjö (SE)
(74) Representative: Scania CV AB
(86) International application number: PCT/SE2015/050238
(87) International publication number: WO 2015/133965

(56) References cited:
- EP-A1- 2 626 281
- WO-A1-2011/075009
- WO-A1-2013/117539
- DE-A1- 3 619 959
- GB-A- 2 089 303
- GB-A- 2 435 246
- GB-A- 2 465 393
- US-A- 4 102 548
- US-A- 4 156 543
- US-A1- 2009 248 242
- US-A1- 2012 259 517
- US-A1- 2013 173 121

## Description

### TECHNICAL AREA

The invention relates to a method to ensure the acceptable function of an air guiding device at a vehicle according to the introduction to claim 1. The invention relates to a system to ensure the acceptable function of an air guiding device at a vehicle. The invention relates also to a motor vehicle. The invention relates also to a computer program and a computer program product.

### BACKGROUND

When travelling, vehicles displace air, and the air resistance influences the fuel consumption of the vehicle. For vehicles such as trucks with a forward vehicle body and a rear vehicle body that is coupled behind the forward vehicle body and that extends upwards and/or sideways beyond the forward vehicle body, the front surface of extended parts of the rear vehicle body will cause significant air resistance. In order to reduce air resistance for such a vehicle, an air guiding device is used, supported by means of the forward vehicle body. Such a rear vehicle body is often exchangeable and the dimensions can differ, which for the optimal reduction of the air resistance requires that the air guiding device be adjustable.

WO2013-117539 reveals an air guiding device for such a vehicle in which the air guiding device can be adjusted by means of an adjuster in the form of an electric motor, and whereby a parameter that corresponds to the adjustment force required is determined during adjustment of the air guiding device. The air guiding device is adjusted between a first condition and a second condition in an adjustment process, known as a "sweep", in order subsequently to be adjusted by means of a control unit into the condition in which the value of the parameter is at its lowest value, which corresponds to the lowest air resistance during travel. The automatic correct adjustment of the roof-mounted air guiding device is in this way made possible.

If the conditions during the adjustment process have been anomalous conditions, for example, that the air guiding device has been influenced by gusts of wind, displaced air from oncoming vehicles or the equivalent, the parameter that has been determined corresponding to the optimal condition for the lowest possible air resistance may be erroneous, such that the air guiding device is adjusted to a non-optimal condition, which results in an increased fuel consumption.

### PURPOSE OF THE INVENTION

One purpose of the present invention is to achieve a method and a system to ensure the acceptable function of an air guiding device at a vehicle that facilitates the ensuring process.

### SUMMARY OF THE INVENTION

These and other purposes, which are made clear by the description below, are achieved by means of a method, a system, a motor vehicle, a computer program and a computer program product of the type described in the introduction, and that furthermore demonstrate the distinctive features specified in the characterising part of the attached independent patent claim 1. Preferred embodiments of the method and the system are defined in the attached non-independent claims.

According to the invention, the purposes are achieved with a method to ensure the acceptable function of an air guiding device at a vehicle, which vehicle has a longitudinal axis parallel to the normal direction of travel of the vehicle and which vehicle comprises a first vehicle body and a second vehicle body arranged behind the first vehicle body and extending upwards and/or sideways beyond the first vehicle body, whereby the air guiding device is supported by means of the said first vehicle body and can be adjusted relative to the said longitudinal axis for the purpose of reducing air resistance, whereby the air guiding device can be adjusted by means of adjusters and whereby a parameter that corresponds to the adjustment force required is determined during adjustment of the air guiding device, comprising the following steps: to determine during a first adjustment process a time course of the said parameter and to determine at essentially corresponding conditions with respect to the travel of the vehicle during at least one further adjustment process a time course of the said parameter; and to compare the time course of the said parameter during the first adjustment process and during the said, at least one, further adjustment process, whereby deviations between time courses of the said parameter determined in this way forms the basis for an assessment of the reliability of the time courses, and wherein in the event that no deviation exists between at least two time courses determined in this way these time courses are consider to be reliable.. It is in this way made easier to ensure the acceptable function of the roof-mounted air guiding device, whereby the risk for erroneous adjustment of the air guiding device is minimised, such that fuel consumption due to air resistance can be minimised.

According to one embodiment, the method comprises the steps: in the event of significant deviations between the time courses determined in this way, to determine at essentially corresponding conditions with respect to the travel of the vehicle during at least one further adjustment process a time course of the said parameter; and to compare the time courses of the said parameter determined in this way, to form the basis of an assessment of the reliability of the time courses. Ensuring the acceptable function of the roof-mounted air guiding device is in this way improved, whereby the risk for erroneous adjustment of the air guiding device is minimised, such that fuel consumption due to air resistance can be minimised.

According to one embodiment of the method, the said conditions include that the vehicle is stationary or being driven at a low speed. A simple ensuring process the acceptable function of the roof-mounted air guiding device is in this way made possible, given that the conditions are to be the same during each such adjustment process or adjustment sweep, and where deviations at two consecutive adjustment processes are made clear, whereby further adjustment processes can be carried out for the ensuring process.

According to one embodiment of the method, the said conditions include that the vehicle is being driven at a speed corresponding to travel of the vehicle. A simple ensuring process the acceptable function of the roof-mounted air guiding device is in this way made possible in conditions in which the function of the air guiding device to reduce air resistance is used, which ensures acceptable function of the roof-mounted air guiding device, given that the conditions are to be the same during each such adjustment process or adjustment sweep, and where deviations at two consecutive adjustment processes are made clear, whereby further adjustment processes can be carried out for the ensuring process.

### DESCRIPTION OF DRAWINGS

The present invention will be better understood with reference to the following detailed description read together with the attached drawings, where the same reference numbers refer to the same parts throughout the several views, and where:
Figure 1a illustrates schematically a side view of a motor vehicle equipped with an air guiding device according to one embodiment of the present invention;
Figure 1b illustrates schematically a plan view of the vehicle in Figure 1a;
Figures 2a-c illustrate schematically an air guiding device arranged at a motor vehicle placed into different conditions;
Figure 2d illustrates schematically the end conditions and the adjustability of the roof-mounted air guiding device in Figures 2a-c;
Figure 3a illustrates schematically a parameter corresponding to the adjustment force required as a function of the condition for a reference adjustment process and for adjustment processes during travel, for an air guiding device according to the present invention;
Figure 3b illustrates schematically the comparison between parameters for the reference adjustment process and the adjustment process during travel according to Figure 3a, for different conditions of the roof-mounted air guiding device;
Figure 4a illustrates schematically a parameter corresponding to the adjustment force required as a function of the condition for a first adjustment process and for subsequent further adjustment processes for an air guiding device according to the one embodiment of the present invention;
Figure 4b illustrates schematically a parameter corresponding to the adjustment force required as a function of the condition for a first adjustment process during travel and for subsequent further adjustment processes during travel for an air guiding device according to the one embodiment of the present invention;
Figure 5 illustrates schematically a block diagram of a system in order to ensure acceptable function of an air guiding device at a vehicle according to one embodiment of the present invention;
Figure 6 illustrates schematically a block diagram of a method in order to ensure acceptable function of an air guiding device at a vehicle; and
Figure 7 illustrates schematically a computer according to one embodiment of the present invention.

### DESCRIPTION OF EMBODIMENTS

In this document, the term "link" refers to a communication link that may be a physical line, such as an opto-electronic communication line, or a non-physical line, such as a wireless connection, for example a radio link or microwave link. Furthermore, the term "to ensure acceptable function" refers to the achievement of the intended function of a roof-mounted air guiding device with respect to a reduction in air resistance in a reliable manner.

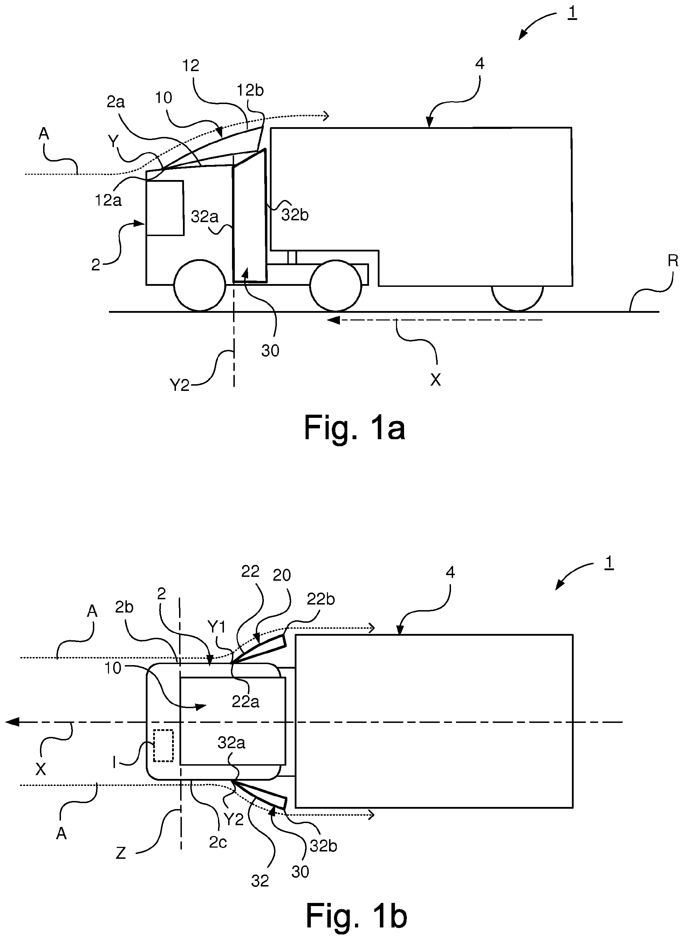

Figure 1a illustrates schematically a side view of a motor vehicle equipped with an air guiding device 10, 20, 30 according to one embodiment of the present invention, and Figure 1b illustrates schematically a plan view of the vehicle in Figure 1a. The vehicle comprises a system I to ensure acceptable function of an air guiding device according to the present invention.

The vehicle 1 has a longitudinal axis X parallel to the normal direction of travel of the vehicle. The vehicle comprises a first forward vehicle body 2 and a second rear vehicle body 4 arranged behind the first vehicle body 2.

The first vehicle body has a cabin section with a roof 2a and two opposing sides 2b, 2c.

The second vehicle body 4 is arranged behind the roofed cabin section. The second vehicle body 4 extends upwards beyond the first vehicle body 2 and above the roof 2a. The second vehicle body 4 extends sideways beyond the first vehicle body 2, i.e. it extends outside of the sides 2b, 2c of the first vehicle body 2.

According to the embodiment illustrated in Figures 1a-b, the vehicle 1 is constituted by a truck 1 where the first vehicle body 2 is constituted by a drawing vehicle 2 and the second vehicle body 4 is constituted by a trailer 4. The trailer 4 can be exchanged, and thus the height and width of such a trailer may vary.

The first vehicle body 2 may constitute also a vehicle body arranged to support load itself, in which case the load constitutes the second vehicle body 4. Such a load may vary.

The vehicle may be constituted by any suitable vehicle at all with a first vehicle body and a second vehicle body that extends outwards beyond the first vehicle body.

The first vehicle body 2 may be constituted by a car and the second vehicle body 4 by a caravan that extends beyond the car, or by a trailer that either on its own and/or with a load extends above and/or to the sides of the car.

The vehicle 1 is equipped with three air guiding devices 10, 20, 30: a roof-mounted air guiding device 10 arranged on the roof 2a of the first vehicle body 2, a first sideways air guiding device 20 arranged on one side 2b, and a sideways air guiding device arranged on the second side 2c of the first vehicle body 2. Each air guiding device 10, 20, 30 is arranged to be supported by means of the said first vehicle body.

Each air guiding device 10, 20, 30 can be adjusted relative to the said longitudinal axis X for the purpose of reducing air resistance. Each air guiding device 10, 20, 30 is arranged to direct in a manner that reduces air resistance air A that the vehicle 1 displaces during travel.

Each air guiding device 10, 20, 30 comprises an air guide 12, 22, 32 with a forward end 12a, 22a, 32a and a rear end 12b, 22b, 32b with respect to the forwards direction of travel of the vehicle.

Thus, the roof-mounted air guiding device 10 has a roof-mounted air guide 12 with a forward end 12a and a rear end 12b, where the roof-mounted air guide 12 has a tilt forwards and downwards from the rear end 12b to the forward end 12a, forming an angle relative to the longitudinal axis X.

Thus, the sideways air guiding device 20 has a sideways air guide 22 with a forward end 22a and a rear end 22b, where the sideways air guide 22 has a tilt forwards and inwards relative to the side of the vehicle from the rear end 22b to the forward end 22a, forming an angle relative to the longitudinal axis X.

Thus, the sideways air guiding device 30 has a sideways air guide 32 with a forward end 32a and a rear end 32b, where the sideways air guide 32 has a tilt forwards and inwards relative to the side of the vehicle from the rear end 32b to the forward end 32a, forming an angle relative to the longitudinal axis X.

Each air guide 12, 22, 32 can have any suitable design at all in order to direct air for the purpose of reducing air resistance during travel of the vehicle 1.

The roof-mounted air guide 12 can be adjusted through rotation around an axis Z that runs in the transverse direction of the vehicle transverse to the longitudinal direction of the vehicle and perpendicular to the longitudinal axis X in association with the forward end 12a.

The sideways air guide 22 can be adjusted through rotation around an axis Y1 that runs in the vertical direction of the vehicle transverse to the longitudinal direction of the vehicle and perpendicular to the longitudinal axis X in association with the forward end 22a.

The sideways air guide 32 can be adjusted through rotation around an axis Y2 that runs in the vertical direction of the vehicle transverse to the longitudinal direction of the vehicle and perpendicular to the longitudinal axis X in association with the forward end 32a.

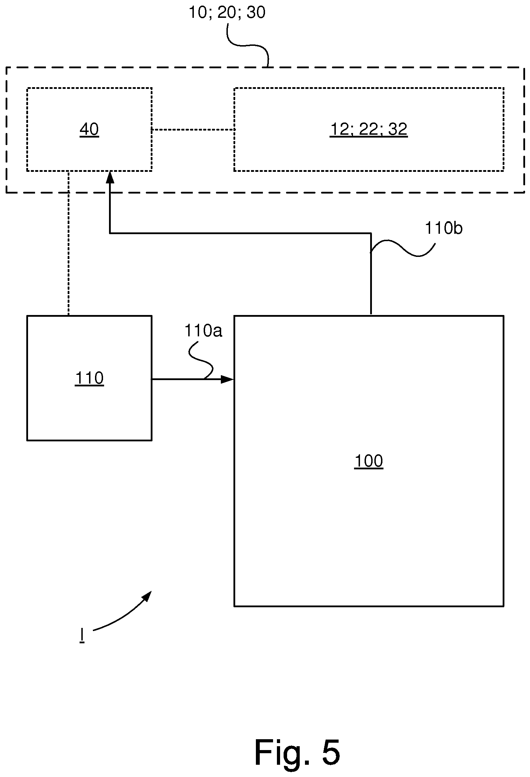

Each air guiding device 10, 20, 30 can be adjusted by means of adjusters, not shown in Figures 1a-b. Thus, each air guiding device 10, 20, 30 comprises in this case adjusters for the adjustment of air guides 12, 22, 32. The adjusters are described in association with Figure 5. The said adjusters may be constituted by any suitable adjuster at all in order to adjust an air guiding device. The said adjusters comprise, according to one embodiment, an electric motor. The said adjusters comprise, alternatively, a pneumatic or hydraulic motor.

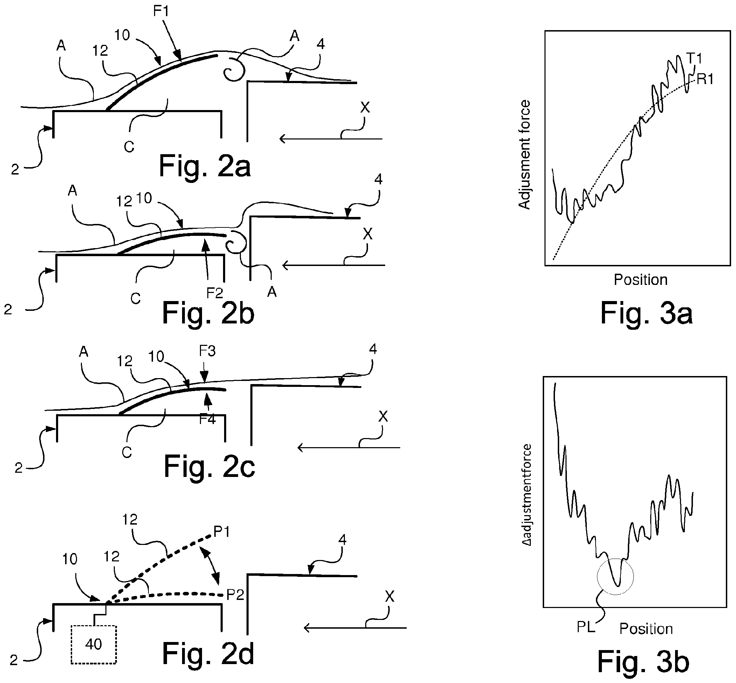

Figures 2a-c illustrate schematically an air guiding device 10 arranged at a motor vehicle placed into different conditions where the flow of air A directed by means of the air guiding device 10 is illustrated for the various conditions. The vehicle is, according to one variant, constituted by the vehicle 1 illustrated in Figures 1a-b and has consequently a first vehicle body 2 and a second vehicle body 4 that extends upwards and/or sideways beyond the first vehicle body 2.

Figure 2a illustrates a condition in which the rear end at the air guide 12 is significantly higher than the height at the rear vehicle body 4, Figure 2b illustrates where the rear end at the air guide 12 is significantly lower than the height at the rear vehicle body 4, and Figure 2c illustrates where the rear end at the air guide 12 is correctly adjusted relative to the rear vehicle body 4.

The air guiding device is here illustrated as roof-mounted air guiding device 10 with roof-mounted air guide 12. It would be possible also that the air guiding device constitute the sideways air guiding device 20 or the sideways air guiding device 30.

The vehicle when travelling will be subject to load from the air, where the load from the air depends on the angle at the air guide 12 relative to the longitudinal axis X parallel to the normal direction of travel of the vehicle, and on the condition of the air guide 12 relative to the rear vehicle body 4. The load due to air that flows against the surface of the air guide increases as the angle relative to the axis X increases. Air that flows past creates a reduced air pressure above the roof-mounted air guide, and consequently a lifting force that acts on the air guide 12.

The air guide creates a compartment C between the first vehicle body 2 and the air guide 12.

In Figure 2a, where the air guide of the air guiding device 10 is adjusted to a condition such that the rear end at the roof-mounted air guide 12 is significantly higher than the height of the rear vehicle body, an excess pressure and a reactive force F1 will be created.

In Figure 2b, where the air guide of the air guiding device 10 is adjusted to a condition such that the rear end at the roof-mounted air guide 12 is significantly lower than the height of the rear vehicle body, a negative pressure and a reactive force F2 will be created.

In Figure 2c, where the air guide of the air guiding device 10 is adjusted to a condition such that the rear end at the roof-mounted air guide 12 essentially corresponds to the height of the rear vehicle body, air will flow evenly over the air guide 12 and onwards over the second vehicle body 4. In this condition, a reactive force F3 directed against the air guide from outside, in accordance with the reactive force F1 from the condition shown in Figure 2a, and an opposing reactive force F4 directed from inside, in accordance with the reactive force F2 in the condition shown in Figure 2b, will essentially cancel each other out.

Figure 2d illustrates schematically the end conditions and the adjustability of the roof-mounted air guiding device 10 shown in Figures 2a-c.

The air guiding device is here illustrated as roof-mounted air guiding device 10 with roof-mounted air guide 12. It would be possible that the air guiding device constitute also the sideways air guiding device 20 or the sideways air guiding device 30.

The air guiding device 10 can be adjusted during an adjustment process between a first condition P1 and a second condition P2. The air guide 10 can thus be adjusted between the first condition P1, in which condition the air guide has an angle relative to the longitudinal axis X parallel to the normal direction of travel of the vehicle that is relatively large, and the second condition P2, in which condition the air guide has an angle relative to the longitudinal axis X that is relatively small.

The air guiding device 10 and thus also the air guide 12 can be adjusted by means of adjusters 40 between the first condition P1 and the second condition P2.

Figure 3a illustrates schematically a parameter corresponding to the adjustment force required as a function of the condition for reference adjustment processes and for adjustment processes during travel, for an air guiding device according to the present invention. The air guiding device is constituted by a roof-mounted air guiding device 10 according to Figure 2d.

The adjustment force corresponds to the force that is required for the adjuster 40 to adjust the air guiding device 10 by rotating the air guide 12 between the conditions P1 and P2. For example, for an adjuster in the form of an electric motor, the adjustment force corresponds to the electrical current required.

The dotted curve illustrates a reference adjustment process arranged to take place when the vehicle is stationary or travelling at low speed. The term "low speed" is used to denote a speed at which the air against the vehicle does not significantly influence the adjustment force required to adjust the air guide.

The reference adjustment process constitutes an adjustment process between the first condition P1 and the second condition P2, according to Figure 2d. In this case, the reference adjustment process takes place in the form of a sweep between the condition P1 and the condition P2. The reference adjustment process can be denoted also as a "reference sweep".

The adjustment force increases with the condition, i.e. with the angle relative to the longitudinal axis X and, here, the height at rear end of the air guide 10 relative to the rear vehicle body 4.

The continuous curve illustrates an adjustment process while travelling, known as an "adjustment process during travel", arranged to take place while travelling, with a speed at which air against the vehicle influences the adjustment force required to adjust the air guide.

Similarly to the reference adjustment process, the adjustment process during travel constitutes an adjustment process between the first condition P1 and the second condition P2, according to Figure 2d. In this case, the adjustment process during travel takes place in the form of a sweep between the condition P1 and the condition P2. The adjustment process during travel can be referred to also as a "travelling sweep".

The adjustment force is influenced by the condition of the air guide, i.e. the angle relative to the longitudinal axis X and, here, the height at the rear end of the air guide 10 relative to the rear vehicle body 4.

Figure 3b illustrates schematically a comparison between parameters for reference adjustment processes and adjustment processes during travel according to Figure 3a, for different conditions of the roof-mounted air guiding device.

Thus, by comparing the reference adjustment process with the adjustment process during travel, it is possible to determine the condition at which the lowest air resistance will be experienced during travel. This condition corresponds to the condition at which the difference in adjustment force between the adjustment forces at different conditions during the reference adjustment process and the adjustment force at corresponding conditions of the adjustment process during travel, the adjustment force, is lowest. By making this comparison, the mechanism at the air guide is taken into consideration, i.e. it is taken into consideration also that the air guide can move more slowly or more lightly purely mechanically in certain conditions.

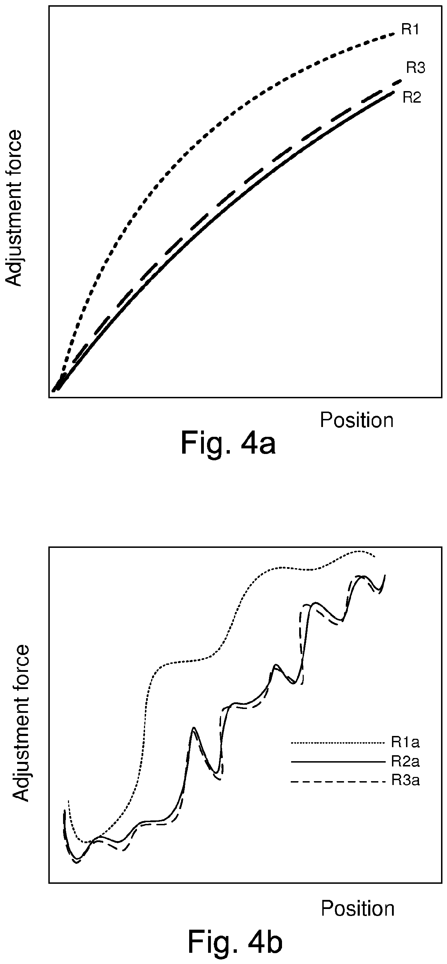

Figure 4a illustrates schematically a parameter corresponding to the adjustment force required as a function of the condition for a first adjustment process and for subsequent further adjustment processes for an air guiding device according to the one embodiment of the present invention;

Consequently, a parameter corresponding to the adjustment force required during adjustment of the air guiding device 10 has been determined by reference adjustment processes at the air guiding device between the first condition P1 and second condition P2, according to Figure 2d.

The subsequent reference adjustment process or processes preferably occur essentially in immediate association with the first reference adjustment process.

In the example shown in Figure 4a, a first reference adjustment process in which the time course is illustrated in the form of a first curve R1 is carried out. A second reference adjustment process has been carried out after the first reference adjustment process, where the time course is illustrated in the form of a second curve R2.

Significant deviations between the time courses R1 and R2 of the first and second reference adjustment processes are in this way determined, whereby a third reference adjustment process is carried out, where the time course is illustrated in the form of a third curve R3.

The absence of deviations between the time courses R2 and R3 of the second and third reference adjustment processes, i.e. the time course of the second reference adjustment process R2 and the time course of the third reference adjustment process R3, are determined in a further comparison.

Due to the fact that the time courses of the second and third reference adjustment processes are essentially in agreement, these time courses are considered to be reliable and are used as a basis for setting the roof-mounted air guiding device.

Figure 4b illustrates schematically a parameter corresponding to the adjustment force required as a function of the condition for a first adjustment process during travel and for subsequent further adjustment processes during travel for an air guiding device according to the one embodiment of the present invention.

Consequently, a parameter corresponding to the adjustment force required during adjustment of the air guiding device 10 has here been determined by a travel adjustment process at the air guiding device between the first condition P1 and second condition P2 according to Figure 2d.

The subsequent travel adjustment process or processes preferably occur essentially in immediate association with the first travel adjustment process.

In the example shown in Figure 4b, a first travel adjustment process in which the time course is illustrated in the form of a first curve R1a is carried out. A second travel adjustment process has been carried out after the first travel adjustment process, where the time course is illustrated in the form of a second curve R2a.

Significant deviations between the time courses R1a and R2a of the first and second travel adjustment processes are in this way determined, whereby a third travel adjustment process is carried out, where the time course is illustrated in the form of a third curve R3a.

The absence of deviations between the time courses R2a and R3a of the second and third travel adjustment processes, i.e. the time course of the second travel adjustment process R2a and the time course of the third travel adjustment process R3a, are determined in a further comparison.

Due to the fact that the time courses of the second and third travel adjustment processes are essentially in agreement, these time courses are considered to be reliable and are used as a basis for setting the roof-mounted air guiding device.

Figure 5 illustrates schematically a block diagram of a system I to ensure acceptable function of an air guiding device 10; 20; 30 at a vehicle according to one embodiment of the present invention.

The system I comprises an electronic control unit 100.

The system I comprises means 110 to determine a parameter that corresponds to the adjustment force required during adjustment of the air guiding device 10; 20; 30. The means 110 to determine a parameter corresponding to the adjustment force required comprises any suitable sensor at all for such a determination. The means 110 to determine a parameter corresponding to the adjustment force required is connected to the adjuster 40 in order to determine the parameter. The adjuster 40 is constituted, according to one variant, by an electric motor, whereby the means 110 is arranged to determine the electrical current that is required to adjust the air guiding device 10; 20; 30, i.e. the air guide 12; 22; 32 at the air guiding device 10; 20; 30.

The system I comprises means 100, 110 to determine during a first adjustment process a time course of the said parameter and, under essentially corresponding conditions with respect to the driving of the vehicle, to determine a time course of the said parameter during at least one further adjustment process. The means 100, 110 includes the electronic control unit 100 and the means 110.

The said conditions include the vehicle being stationary or being driven at a low speed. The means 100, 110 is in this case arranged to determine during a first reference adjustment process a time course of the said parameter and, under essentially corresponding conditions with respect to the driving of the vehicle, to determine a time course of the said parameter during at least one further reference adjustment process. The reference adjustment process takes place through the air guiding device being adjusted during a reference sweep between a first and a second condition, as explained in association with Figure 2d.

The said conditions include the vehicle being stationary or being driven at a low speed. The means 100, 110 is in this case arranged to determine during a first travel adjustment process a time course of the said parameter and, under essentially corresponding conditions with respect to the driving of the vehicle, to determine a time course of the said parameter during at least one further travel adjustment process. The adjustment process during travel takes place through the air guiding device being adjusted during a reference sweep between a first and a second condition, as explained in association with Figure 2d.

The system I comprises means 100, 110 to compare the time course of the said parameter during the first adjustment process and during the said, at least one, further adjustment process. The means 100 to compare the time courses includes the electron control unit 100. The means 100, 110 includes the electronic control unit 100 and the means 110.

The system I comprises means 100 to determine, in the event of significant deviations between the time courses determined in this way, under essentially corresponding conditions with respect to the driving of the vehicle, a time course of the said parameter during at least one further adjustment process.

The system I comprises in this case means 40, 100 to control the air guiding device 10; 20; 30 to carry out at least one further adjustment process. The means 40, 100 to control the air guiding device 10; 20; 30 comprises the electronic control unit. The means 40, 100 to control the air guiding device 10; 20; 30 comprises the adjuster 40. The means 40, 100 to control the air guiding device 10; 20; 30 is arranged also to control the air guiding device 10; 20; 30 to carry out the said first adjustment process, the second adjustment process, and further adjustment processes. The means 40, 100 to control the air guiding device 10; 20; 30 is arranged also to control the air guiding device 10; 20; 30 such that it adjusts the air guiding device to its condition determined for the least possible air resistance when travelling.

The electronic control unit 100 is connected such that it transfers signals to the means 110 to determine a parameter that corresponds to the adjustment force required during adjustment of the air guiding device through a link 110a. The electronic control unit 100 is arranged to receive through the link 110a a signal from the means 110 representing data for the time course of the parameter corresponding to the adjustment force required during adjustment of the air guiding device during the adjustment processes.

The electronic control unit 100 is arranged to compare the said data representing time courses of the parameter during a first adjustment process and a further adjustment process that includes a second adjustment process, whereby deviations between the time courses of the said parameter determined in this way are used as a basis to assess the reliability of the time courses.

The electronic control unit 100 is connected such that it transfers signals to the adjuster 40 through a link 110b. The electronic control unit 100 is arranged to transmit through the link 110a a signal to the adjuster 40 representing data for adjustment processes for the control of the air guiding device during adjustment processes, including the first adjustment process and at least one further adjustment process.

The electronic control unit 100 is arranged to determine, in the event of significant deviations between the time courses of the said parameter determined during the first adjustment process and the said further adjustment processes, under essentially corresponding conditions with respect to the driving of the vehicle during at least one further adjustment process, a time course of the said parameter. The electronic control unit 100 is consequently arranged to transmit, in the even of significant deviations between the time courses of the said parameter determined during the first adjustment process and the said further adjustment processes, a signal to the adjuster in order to carry out one further adjustment process under corresponding conditions with respect to the driving of the vehicle. The electronic control unit 100 is subsequently arranged to compare the time courses of the said parameter that have been determined in this way, to form the basis of an assessment of the reliability of the time courses.

The electronic control unit 100 is arranged, during comparison of the adjustment processes, in the case that there are no deviations at least two such time courses determined are present, to consider these time courses to be reliable.

The electronic control unit 100 is arranged to transmit over the link 110b a signal to the adjuster 40 for the setting of the condition of the air guide 12, 22, 32 at the roof-mounted air guiding device 10; 20; 30 based on the lowest difference in adjustment force determined between reference adjustment processes determined in this way and travel adjustment processes, such that the roof-mounted air guiding device 10; 20; 30 is adjusted to the condition that leads to the lowest air resistance.

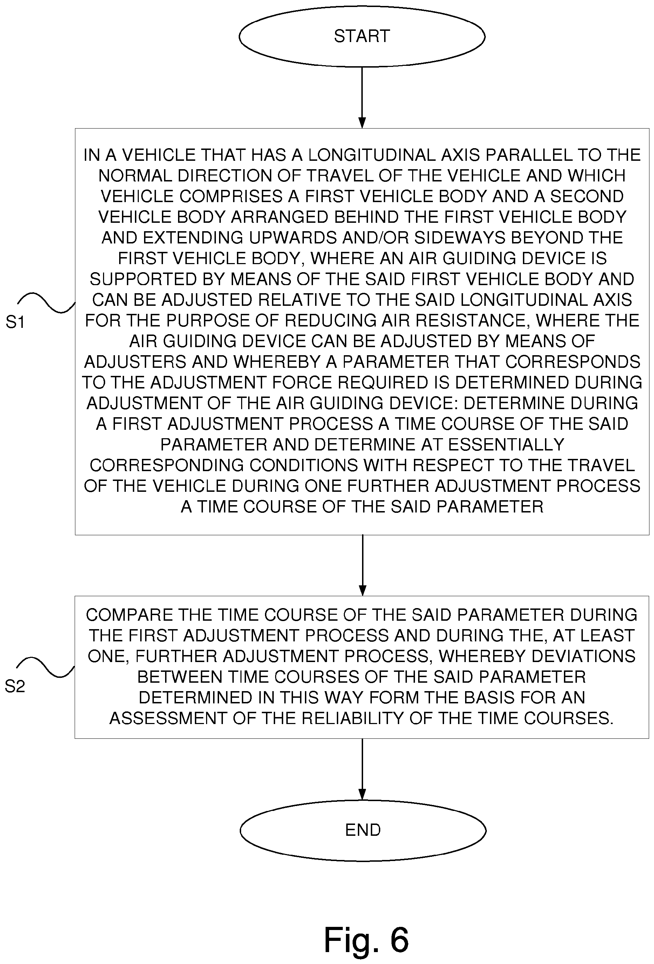

Figure 6 illustrates schematically a block diagram of a method in order to ensure acceptable function of an air guiding device at a vehicle, which vehicle has a longitudinal axis parallel to the normal direction of travel of the vehicle and which vehicle comprises a first vehicle body and a second vehicle body arranged behind the first vehicle body and extends upwards and/or sideways beyond the first vehicle body, whereby the air guiding device is supported by means of the said first vehicle body and can be adjusted relative to the said longitudinal axis for the purpose of reducing air resistance, whereby the air guiding device can be adjusted by means of adjusters and whereby a parameter that corresponds to the adjustment force required is determined during adjustment of the air guiding device according to one embodiment of the present invention.

According to one embodiment, the method to ensure the acceptable function of an air guiding device at a vehicle comprises a first step, S1. A time course of the said parameter is determined during this step, during a first adjustment process, and, under essentially corresponding conditions with respect to the driving of the vehicle, during at least one further adjustment process of the said parameter.

According to one embodiment, the method to ensure the acceptable function of an air guiding device at a vehicle comprises a second step, S2. During this step, the time course of the said parameter during the first adjustment process and during the said, at least one, further adjustment process, are compared, whereby deviations between the time courses of the said parameter determined in this way are used as a basis to assess the reliability of the time courses.

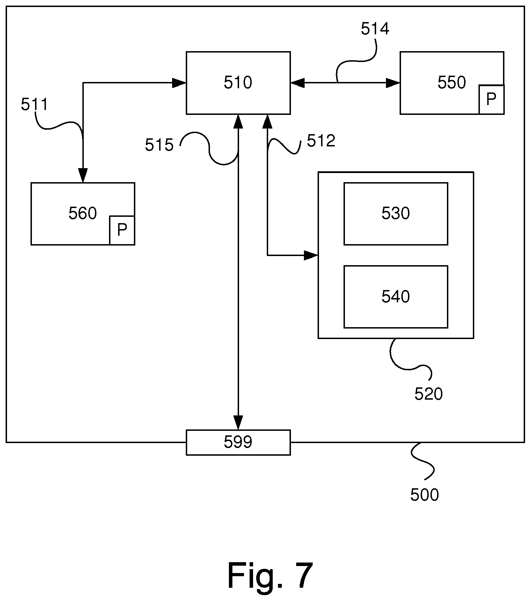

With reference to Figure 7, there is shown a drawing of a design of an arrangement 500. The control unit 100 that has been described with reference to Figure 5 can comprise in one execution the arrangement 500. The arrangement 500 comprises a non-transient memory 520, a data processing unit 510 and a read/write memory 550. The non-transient memory 520 has a first section of memory 530 in which a computer program, such as an operating system, is stored in order to control the function of the arrangement 500. Furthermore, the arrangement 500 comprises a bus controller, a serial communication port, I/O means, an A/D converter, a unit for the input and transfer of time and date, an event counter and an interrupt controller (not shown in the drawing). The non-transient memory 520 has also a second section of memory 540.

There is provided a computer program P that comprises routines to ensure the acceptable function of an air guiding device at a vehicle, which vehicle has a longitudinal axis parallel to the normal direction of travel of the vehicle and which vehicle comprises a first vehicle body and a second vehicle body arranged behind the first vehicle body and extending upwards and/or sideways beyond the first vehicle body, whereby the air guiding device is supported by means of the said first vehicle body and can be adjusted relative to the said longitudinal axis for the purpose of reducing air resistance, whereby the air guiding device can be adjusted by means of adjusters, and whereby a parameter that corresponds to the adjustment force required is determined during adjustment of the air guiding device according to the innovative method. The programme P comprises routines to determine, during a first adjustment process, a time course of the said parameter and to determine, under essentially corresponding conditions with respect to the driving of the vehicle, during at least one further adjustment process, a time course of the said parameter. The programme P comprises routines to compare the time course of the said parameter during the first adjustment process and during the said, at least one, further adjustment process, whereby deviations between the time courses of the said parameter determined in this way are used as a basis to assess the reliability of the time courses. The program P may be stored in an executable form or in a compressed form in a memory 560 and/or a read/write memory 550.

When it is described that the data processing unit 510 carries out a certain function, it is to be understood that the data processing unit 510 carries out a certain part of the program that is stored in the memory 560, or a certain part of the program that is stored in the read/write memory 550.

The data processing arrangement 510 can communicate with a data port 599 through a data bus 515. The non-transient memory 520 is intended for communication with the data processing unit 510 through a data bus 512. The separate memory 560 is intended to communicate with the data processing unit 510 through a data bus 511. The read/write memory 550 is arranged to communicate with the data processing unit 510 through a data bus 514. Links associated with the control units 200; 300, for example, may be connected to the data port 599.

When data is received at the data port 599 it is temporarily stored in the second section of memory 540. When the data that has been received has been temporarily stored, the data processing unit 510 is prepared for the execution of code in a manner that has been described above. The signals receive at the data port 599 can be used by the arrangement 500 to determine, during a first adjustment process, a time course of the said parameter and, under essentially corresponding conditions with respect to the driving of the vehicle, during at least one further adjustment process, to determine a time course of the said parameter. The signals receive at the data port 599 can be used by the arrangement 500 to compare the time course of the said parameter during the first adjustment process and during the said, at least one, further adjustment process, whereby deviations between the time courses of the said parameter determined in this way are used as a basis to assess the reliability of the time courses.

Parts of the methods described here may be carried out by the arrangement 500 with the aid of the data processing unit 510, which runs the program stored in the memory 560 or in the read/write memory 550. When the arrangement 500 runs the program, the method described here is executed.

The description above of the preferred embodiments of the present invention has been given for the purposes of illustration and description. It is not intended to be exhaustive or to limit the invention to the variants that have been described. Many modifications and variations will be obvious for one skilled in the arts. The embodiments have been selected and described in order to best describe the principles of the invention and its practical applications, and thus to make it possible for one skilled in the arts to understand the invention for various embodiments and with the various modifications that are appropriate for the intended use.

## Claims

1. A method to ensure acceptable function of an air guiding device (10; 20; 30) at a vehicle (1), which vehicle has a longitudinal axis (X) parallel to the normal direction of travel of the vehicle (1) and which vehicle (1) comprises a first vehicle body (2) and a second vehicle body (4) arranged behind the first vehicle body (2) and extending upwards and/or sideways beyond the first vehicle body (2), whereby the air guiding device (10; 20; 30) is supported by means of the said first vehicle body (2) and can be adjusted relative to the said longitudinal axis (X) for the purpose of reducing air resistance, whereby the air guiding device (10; 20; 30) can be adjusted by means of adjusters (40), and whereby a parameter that corresponds to the adjustment force required is determined during adjustment of the air guiding device (10; 20; 30), and comprising the following steps: to determine, during a first adjustment process, a time course (R1, R1a) of the said parameter and, under essentially corresponding conditions with respect to the driving of the vehicle during at least one further adjustment process to determine a time course (R2, R3, R2a, R3a) of the said parameter, and to compare the time course of the said parameter during the first adjustment process and during the said, at least one, further adjustment process, **characterised by** the deviations between time courses of the said parameter determined in this way forming the basis for an assessment of the reliability of the time courses, and wherein in the event that no deviation exists between at least two time courses determined in this way these time courses are consider to be reliable.

2. The method according to claim 1, comprising the steps to determine, in the event of significant deviations between the time courses (R1, R2, R3, R1a, R2a, R3a) determined in this way, under essentially corresponding conditions with respect to the driving of the vehicle during at least one further adjustment process, a time course of the said parameter; and to compare the time courses of the said parameter to form the basis of the assessment of the reliability of the processes.

3. The method according to any one of claims 1-2, whereby the said conditions include the vehicle being stationary or being driven at a low speed.

4. The method according to any one of claims 1-2, whereby the said conditions include the vehicle being driven at a speed that corresponds to travel of the vehicle.

5. A system (I) to ensure acceptable function of an air guiding device (10; 20; 30) at a vehicle (1), which vehicle (1) has a longitudinal axis (X) parallel to the normal direction of travel of the vehicle (1) and which vehicle (1) comprises a first vehicle body (2) and a second vehicle body (4) arranged behind the first vehicle body (2) and extending upwards and/or sideways beyond the first vehicle body (2), whereby the air guiding device (10; 20; 30) is arranged to be supported by means of the said first vehicle body (2) and can be adjusted relative to the said longitudinal axis (X) for the purpose of reducing air resistance, whereby the air guiding device (10; 20; 30) can be adjusted by means of adjusters (40) and whereby means (110) are available to determine a parameter that corresponds to the adjustment force required during adjustment of the air guiding device (10; 20; 30), the system comprising means (100; 110) to: determine during a first adjustment process, a time course (R1, R1a) of the said parameter and, under essentially corresponding conditions with respect to the driving of the vehicle during at least one further adjustment process, to determine a time course (R2, R3, R2a, R3a) of the said parameter; and means (100) to compare the time course of the said parameter during the first adjustment process and during the said, at least one, further adjustment process, **characterised in that** deviations between time courses of the said parameter determined in this way form the basis for an assessment of the reliability of the time courses, and means (100) by which these time courses are considered to be reliable, in the event that no deviation exists between at least two time courses determined in this way.

6. The system according to claim 5, comprising means (100, 110) to determine, in the event of significant deviations between the time courses determined in this way, under essentially corresponding conditions with respect to the driving of the vehicle during at least one further adjustment process, a time course of the said parameter; and means (100) to compare the time courses of the said parameter that have been determined to form the basis of the assessment of the reliability of the process.

7. The system according to any one of claims 5-6, whereby the said conditions include the vehicle being stationary or being driven at a low speed.

8. The system according to any one of claims 5-6, whereby the said conditions include the vehicle being driven at a speed that corresponds to travel of the vehicle.

9. A motor vehicle (1) comprising a system (I) according to any one of claims 5-8.

10. A computer program (P) to ensure acceptable function of an air guiding device at a vehicle, where the said computer program (P) comprises program code that, when it is run by an electronic control unit (100) or by another computer (500) connected to the electronic control unit (100), causes the electronic control unit to carry out the steps according to claims 1-4.

11. A computer program product comprising a digital storage medium that stores the computer program according to claim 10.

## Patentansprüche

1. Verfahren zur Sicherstellung einer hinreichenden Funktion einer Luftleiteinrichtung (10; 20; 30) an einem Fahrzeug (1), wobei das Fahrzeug eine zur normalen Fortbewegungsrichtung des Fahrzeugs (1) parallele Längsachse (X) hat und wobei das Fahrzeug (1) einen ersten Fahrzeugkörper (2) und einen zweiten Fahrzeugkörper (4) aufweist, der hinter dem ersten Fahrzeugkörper (2) angeordnet ist und sich nach oben und/oder seitlich über den ersten Fahrzeugkörper (2) hinaus erstreckt, wobei die Luftleiteinrichtung (10; 20; 30) mittels des ersten Fahrzeugkörpers (2) abgestützt ist und bezüglich der Längsachse (X) zum Zweck einer Luftwiderstandsverringerung eingestellt werden kann, wobei die Luftleiteinrichtung (10; 20; 30) mit Hilfe von Verstellern (40) eingestellt werden kann und wobei ein Parameter, der der erforderlichen Einstellkraft entspricht, während eines Einstellens der Luftleiteinrichtung (10; 20; 30) ermittelt wird, umfassend die folgenden Schritte: Ermitteln, während eines ersten Einstellvorgangs, eines zeitlichen Verlaufs (R1, R1a) des Parameters und, unter im Wesentlichen entsprechenden Bedingungen hinsichtlich des Fahrens des Fahrzeugs, Ermitteln eines zeitlichen Verlaufs (R2, R3, R2a, R3a) des Parameters während wenigstens eines weiteren Einstellvorgangs und Vergleichen des Zeitverlaufs des Parameters während des ersten Einstellvorgangs und während des wenigstens einen weiteren Einstellvorgangs, **dadurch gekennzeichnet, dass** die solchermaßen ermittelten Abweichungen zwischen Zeitverläufen des Parameters die Grundlage für eine Beurteilung der Glaubwürdigkeit der Zeitverläufe bilden, und dass für den Fall, dass zwischen wenigstens zwei solchermaßen ermittelten Zeitverläufen keine Abweichung existiert, diese Zeitverläufe als glaubwürdig angesehen werden.

2. Verfahren nach Anspruch 1, umfassend den Schritt des Ermittelns, im Falle wesentlicher Abweichungen zwischen den solchermaßen ermittelten Zeitverläufen (R1, R2, R3, R1a, R2a, R3a), eines Zeitverlaufs dieses Parameters während wenigstens eines weiteren Einstellvorgangs unter im Wesentlichen entsprechenden Bedingungen hinsichtlich des Fahrens des Fahrzeugs, und des Vergleichens der Zeitverläufe der Parameter, um die Basis für die Beurteilung der Glaubwürdigkeit der Vorgänge zu bilden.

3. Verfahren nach einem der Ansprüche 1 bis 2, wobei die Bedingungen beinhalten, dass das Fahrzeug stillsteht oder mit einer geringen Geschwindigkeit gefahren wird.

4. Verfahren nach einem der Ansprüche 1 bis 2, wobei die Bedingungen beinhalten, dass das Fahrzeug mit einer Geschwindigkeit gefahren wird, die einem Reisen des Fahrzeugs entspricht.

5. System (I) zur Sicherstellung einer hinreichenden Funktion einer Luftleiteinrichtung (10; 20; 30) an einem Fahrzeug (1), wobei das Fahrzeug (1) eine zur normalen Fortbewegungsrichtung des Fahrzeugs (1) parallele Längsachse (X) hat und wobei das Fahrzeug (1) einen ersten Fahrzeugkörper (2) und einen zweiten Fahrzeugkörper (4) aufweist, der hinter dem ersten Fahrzeugkörper (2) angeordnet ist und sich nach oben und/oder seitlich über den ersten Fahrzeugkörper (2) hinauserstreckt, wobei die Luftleiteinrichtung (10; 20; 30) dazu angeordnet ist, mittels des ersten Fahrzeugkörpers (2) abgestützt zu werden und relativ zur Längsachse (X) zum Zweck einer Luftwiderstandsverringerung eingestellt werden kann, wobei die Luftleiteinrichtung (10; 20; 30) mit Hilfe von Verstellern (40) eingestellt werden kann und wobei eine Einrichtung (110) vorhanden ist, um einen Parameter zu ermitteln, der der während einer Einstellung der Luftleiteinrichtung (10; 20; 30) erforderlichen Einstellkraft entspricht, wobei das System eine Einrichtung (100; 110) aufweist zum: Ermitteln eines Zeitverlaufs (R1, R1a) des Parameters während eines ersten Einstellvorgangs und, unter im Wesentlichen entsprechenden Bedingungen hinsichtlich des Fahrens des Fahrzeugs, Ermitteln eines Zeitverlaufs (R2, R3, R2a, R3a) des Parameters während wenigstens eines weiteren Einstellvorgangs, und eine Einrichtung (100) zum Vergleichen des Zeitverlaufs des Parameters während des ersten Einstellvorgangs und während des wenigstens einen weiteren Einstellvorgangs, **dadurch gekennzeichnet, dass** Abweichungen zwischen solchermaßen ermittelten Zeitverläufen des Parameters die Basis für eine Beurteilung der Glaubwürdigkeit der Zeitverläufe bilden, und durch eine Einrichtung (100), mittels welcher diese Zeitverläufe als glaubwürdig angesehen werden, falls keine Abweichung zwischen zumindest zwei solchermaßen ermittelter Zeitverläufe existiert.

6. System nach Anspruch 5, mit einer Einrichtung (100, 110) zum Ermitteln, im Falle wesentlicher Abweichungen zwischen den solchermaßen ermittelten Zeitverläufen, eines Zeitverlaufs des Parameters unter im Wesentlichen entsprechenden Bedingungen hinsichtlich des Fahrens des Fahrzeugs während wenigstens eines weiteren Einstellvorgangs, und einer Einrichtung (100) zum Vergleichen der ermittelten Zeitverläufe des Parameters, um die Basis für die Beurteilung der Glaubwürdigkeit des Vorgangs zu bilden.

7. System nach einem der Ansprüche 5 bis 6, wobei die Bedingungen beinhalten, dass das Fahrzeug stillsteht oder mit einer niedrigen Geschwindigkeit gefahren wird.

8. System nach einem der Ansprüche 5 bis 6, wobei die Bedingungen beinhalten, dass das Fahrzeug mit einer Geschwindigkeit gefahren wird, die einem Reisen des Fahrzeugs entspricht.

9. Kraftfahrzeug (1) mit einem System (I) nach einem der Ansprüche 5 bis 8.

10. Computerprogramm (P) zur Sicherstellung einer hinreichenden Funktion einer Luftleiteinrichtung an einem Fahrzeug, wobei das Computerprogramm (P) einen Programmcode enthält, der, wenn er auf einer elektronischen Steuereinheit (100) oder auf einem anderen mit der elektronischen Steuereinheit (100) verbundenen Computer (500) abläuft, die elektronische Steuereinheit dazu veranlasst, die Schritte gemäß den Ansprüchen 1 bis 4 auszuführen.

11. Computerprogrammprodukt mit einem digitalen Speichermedium, das das Computerprogramm nach Anspruch 10 speichert.

## Revendications

1. Procédé pour garantir un fonctionnement acceptable d'un dispositif de guidage d'air (10 ; 20 ; 30) sur un véhicule (1), lequel véhicule a un axe longitudinal (X) parallèle à la direction normale de déplacement du véhicule (1) et lequel véhicule (1) comprend un première carrosserie de véhicule (2) et une deuxième carrosserie de véhicule (4) disposée derrière la première carrosserie de véhicule (2) et s'étendant vers le haut et/ ou latéralement au-delà de la première carrosserie de véhicule (2), dans lequel le dispositif de guidage d'air (10 ; 20 ; 30) est supporté au moyen de ladite première carrosserie de véhicule (2) et peut être réglé par rapport audit axe longitudinal (X) dans le but de la réduction de résistance à l'air, dans lequel le dispositif de guidage d'air (10 ; 20 ; 30) peut être réglé au moyen de dispositifs de réglage (40), et dans lequel un paramètre correspondant à la force de réglage requise est déterminé durant le réglage du dispositif de guidage d'air (10 ; 20 ; 30), et comprenant les étapes suivantes : déterminer, durant un premier processus de réglage, une durée temporelle (R1, R1a) dudit paramètre et, sous des conditions essentiellement correspondantes par rapport à la conduite du véhicule durant au moins un processus de réglage supplémentaire pour déterminer une durée temporelle (R2, R3, R2a, R3a) dudit paramètre, et comparer la durée temporelle dudit paramètre durant le premier processus de réglage et durant ledit au moins un processus de réglage supplémentaire, **caractérisé en ce que** les écarts entre les durées temporelles dudit paramètre déterminé de cette manière forment la base pour une évaluation de la fiabilité des durées temporelles, et dans lequel au cas où il n'existe pas d'écart entre au moins deux durées temporelles déterminées de cette manière, ces durées temporelles sont considérées comme fiables.

2. Procédé selon la revendication 1, comprenant les étapes pour déterminer, en cas d'écarts significatifs entre les durées temporelles (R1, R2, R3, R1a, R2a, R3a) déterminées de cette manière, sous des conditions essentiellement correspondantes par rapport à la conduite du véhicule durant au moins un processus de réglage supplémentaire, une durée temporelle dudit paramètre ; et pour comparer les durées temporelles dudit paramètre pour former la base de l'évaluation de la fiabilité des processus.

3. Procédé selon l'une quelconque des revendications 1-2, dans lequel lesdites conditions comprennent le véhicule stationnaire ou conduit à une vitesse faible.

4. Procédé selon l'une quelconque des revendications 1-2, dans lequel lesdites conditions comprennent la conduite du véhicule à une vitesse qui correspond au déplacement du véhicule.

5. Un système (I) pour garantir un fonctionnement acceptable d'un dispositif de guidage d'air (10 ; 20 ; 30) sur un véhicule (1), lequel véhicule a un axe longitudinal (X) parallèle à la direction normale de déplacement du véhicule (1) et lequel véhicule (1) comprend un première carrosserie de véhicule (2) et une deuxième carrosserie de véhicule (4) disposée derrière la première carrosserie de véhicule (2) et s'étendant vers le haut et/ ou latéralement au-delà de la première carrosserie de véhicule (2), dans lequel le dispositif de guidage d'air (10 ; 20 ; 30) est disposé pour être supporté au moyen de ladite première carrosserie de véhicule (2) et peut être réglé par rapport audit axe longitudinal (X) dans le but de la réduction de résistance à l'air, dans lequel le dispositif de guidage d'air (10 ; 20 ; 30) peut être réglé au moyen de dispositifs de réglage (40), et où des moyens (110) sont disponibles pour déterminer un paramètre correspondant à la force de réglage requise durant le réglage du dispositif de guidage d'air (10 ; 20 ; 30), et comprenant des moyens (100, 110) pour : déterminer durant un premier processus de réglage, une durée temporelle (R1, R1a) dudit paramètre et, sous des conditions essentiellement correspondantes par rapport à la conduite du véhicule durant au moins un processus de réglage supplémentaire, déterminer une durée temporelle (R2, R3, R2a, R3a) dudit paramètre ; et des moyens (100) pour comparer la durée temporelle dudit paramètre durant le premier processus de réglage, **caractérisé en ce que** les écarts entre les durées temporelles pour une évaluation de la fiabilité des durées temporelles, et des moyens (100) par lesquels ces durées temporelles sont considérées comme fiables, au cas où il n'existe pas d'écart entre au moins deux durées temporelles déterminées de cette manière.

6. Système selon la revendication 5, comprenant des moyens (100, 110) pour déterminer, en cas d'écarts significatifs entre les durées temporelles déterminées de cette manière, sous des conditions essentiellement correspondantes par rapport à la conduite du véhicule durant au moins un processus de réglage supplémentaire, une durée temporelle dudit paramètre ; et des moyens (100) pour comparer les durées temporelles dudit paramètre qui ont été déterminées pour former la base de l'évaluation de la fiabilité du processus.

7. Système selon l'une quelconque des revendications 5-6, où lesdites conditions comprennent le véhicule stationnaire ou conduit à une vitesse faible.

8. Système selon l'une quelconque des revendications 5-6, où lesdites conditions comprennent la conduite du véhicule à une vitesse qui correspond au déplacement du véhicule.

9. Véhicule à moteur (1) comprenant un système (I) selon l'une quelconque des revendications 5-8.

10. Programme informatique (P) pour garantir un fonctionnement acceptable d'un dispositif de guidage d'air sur un véhicule, dans lequel ledit programme informatique (P) comprend un code de programme qui, lorsqu'il est exécuté par une unité de commande électronique (100) ou par un autre ordinateur (500) connecté à l'unité de commande électronique (100), amène l'exécution des étapes par l'unité de commande électronique selon les revendications 1-4.

11. Produit de programme informatique comprenant un support de stockage numérique qui stocke le programme informatique selon la revendication 10.
